# EUROPEAN PATENT APPLICATION

(11) **EP 1 814 019 A2**
(43) Date of publication of application: **01.08.2007**
(21) Application number: 07100019.4
(22) Date of filing: 02.01.2007
(51) Int. Cl.: G06F 3/048

(54) **Display control apparatus**

(30) Priority: 26.01.2006 CN 200610002338
(71) Applicant: High Tech Computer Corp., Taoyuan City, Taoyuan Hsien (TW)
(72) Inventor: Kao, Yih-Feng, Taoyuan City (TW); Hsu, Chih-Feng, Taoyuan City (TW); Wu, Kuo-Chen, Taoyuan City (TW); Huang, Ming-San, Taoyuan City (TW); Wang, John C., Taoyuan City (TW)
(74) Representative: Viering, Jentschura & Partner

(57) **Abstract**

The display control apparatus of the present invention includes a motion sensor, a processor and a display controller. The motion sensor is used to sense the motion of an electronic device and sends out a motion parameter to a processor. Each motion parameter is related to a special motion direction and motion velocity. When the processor receives a motion parameter, a corresponding display instruction is triggered. This display instruction is sent to the display controller to move the page based on the motion direction and motion velocity.

## Description

### Field of the Invention

The present invention relates to a method and apparatus for controlling a display, and more particularly to a method and apparatus for controlling a display by device's tilting.

### Background of the Invention

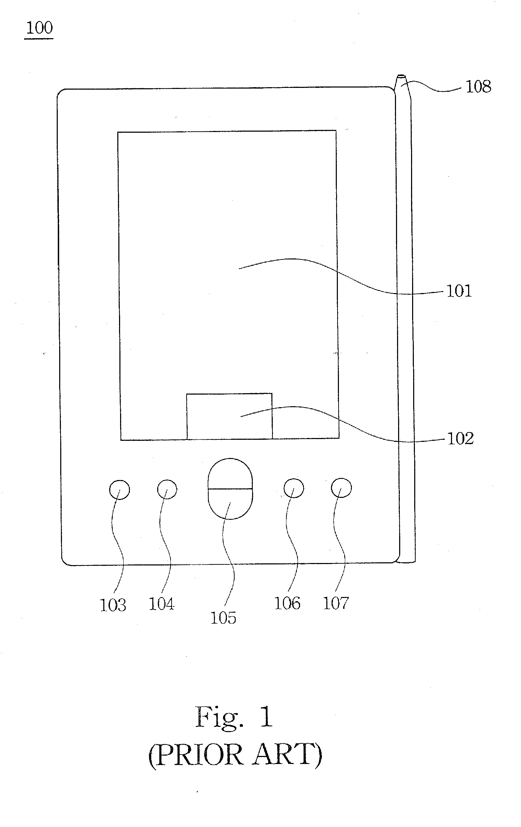

Figure 1 is a schematic diagram of a typical electronic device. The electronic device 100 includes a display 101, a handwriting region 102, control button 103, 104, 104, 105, 106 and 107 and a stylus 108. A user may control the electronic device to process a special function or input special information using the stylus 108 to input or push corresponding buttons.

However, when more and more functions are built in an electronic device 100, additional control buttons are required to control these functions. In other words, it is necessary to reserve additional space in the electronic device for installing these buttons.

Moreover, a stylus may be used to replace these buttons to be an input apparatus. However, a user has to hold the stylus in one hand and hold the electronic device in the other hand. When using the stylus to input information or control the display, the user has to keep a close watch on the display. Such control method is not convenience for a user.

Therefore, a new control apparatus and control method is required.

### Summary of the Invention

The main purpose of the present invention is to provide a display control apparatus to change the display page by the motion of the electronic device.

The purpose of the present invention is to provide a display control apparatus to change the display page by tilting the electronic device.

The purpose of the present invention is to provide a display control apparatus to change the display page by waving the electronic device.

The purpose of the present invention is to provide a display control apparatus to fix the display page by moving the electronic device to a special position.

According to the foregoing purposes, the present invention provides a display control apparatus installed in an electronic device. The display control apparatus includes a motion sensor, a processor and a display controller. The motion sensor is used to sense the motion of an electronic device and sends out a motion parameter to a processor. Each motion parameter is related to a special motion direction and a motion velocity. After the processor receives a motion parameter, the processor may compare this motion parameter with a start value to determine whether or not to trigger a display instruction. When the motion parameter is larger than the start value, the display instruction is triggered. This display instruction is sent to the display controller to move the display page based on the motion direction and the motion velocity.

According to an embodiment, the display control apparatus further includes a user interface coupled with the processor. By the user interface, the start value and the corresponding relationship of the motion parameter to the motion direction and motion velocity may be changed by a user.

According to an embodiment, the display control apparatus further includes a user interface coupled with the processor. By the user interface, the start acceleration difference value and the corresponding relationship of the motion parameter to the motion direction and motion velocity may be changed by a user.

According to another embodiment, the present invention provides a display control method. The display control method includes a sensor to sense the motion of an electronic device and sends out a motion parameter. This motion parameter is compared with a start value to determine whether or not the motion parameter is larger than a start value. When the motion parameter is larger than the start value, a page is moved based on the motion direction and motion velocity. When the motion parameter is less than the start value, the page motion is stopped.

According to one embodiment, the method further comprises modifying the relationships between the motion parameter and the motion direction and the motion velocity through a user interface.

According to another embodiment, the present invention provides a display control method. The display control method includes a sensor to sense the motion of an electronic device and sends out a motion parameter. This motion parameter is compared with a start acceleration difference value to determine whether or not the motion parameter is larger than a special acceleration difference value. When the motion parameter is larger than the special acceleration difference value, a page is moved based on the motion direction and motion velocity. When the motion parameter is less than the special acceleration difference value, the page motion is stopped.

According to one embodiment, the method further comprises modifying the special acceleration difference value, and the relationships between the special acceleration difference value and the motion direction and the motion velocity through a user interface.

According to one embodiment, the acceleration difference value is determined by comparing the acceleration value in a first position with the acceleration value in a second position.

Accordingly, no additional control button is installed in the electronic device, which does not affect the whole volume of the electronic device. Moreover, a user may set the relationship between the rotation angle of electronic device and the page motion based on his requirement. Therefore, the present invention is the best for the user requirements.

### Brief Description of the Drawings

The foregoing aspects and many of the attendant advantages of this invention are more readily appreciated and better understood by referencing the following detailed description, when taken in conjunction with the accompanying drawings, wherein:
Figure 1 is a schematic diagram of an electronic device.
Figure 2 illustrates a schematic diagram of a display controller according to a preferred embodiment.
Figure 3 illustrates the relationship of the rotation angle to the motion of the thumbs.
Figure 4 illustrates the relationship between the display page and the whole page.
Figure 5 illustrates a schematic diagram of waving a electronic device.
Figure 6 illustrates a flow chart for controlling the display according to an embodiment of the present invention.
Figure 7 illustrates a flow chart for controlling the display according to another embodiment of the present invention.

### Detailed Description of the Preferred Embodiment

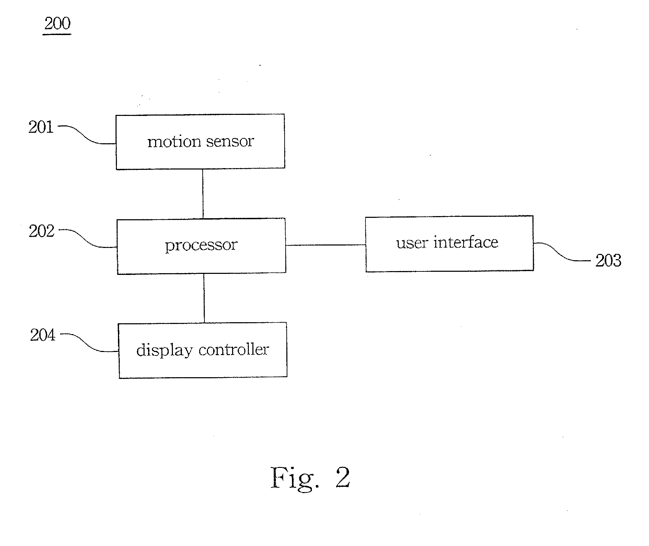

Figure 2 illustrates a schematic diagram of a display controller according to a preferred embodiment. The display control apparatus 200 is embedded in a portable electronic device, such as a mobile phone, a personal digital assistants (PDA), a notebook and so on.

The display control apparatus 200 of the present invention includes a motion sensor 201, a processor 202 and a display controller 204. The motion sensor 201 is, for example, a 2-axle accelerator, a 3-axle accelerator, an inclinometer or a compass sensor. The motion sensor 201 is used to sense the motion of the electronic device and sends out a corresponding motion parameter.

The processor 202 is coupled with the motion sensor 201. A display instruction is stored in the processor 202. The relationship between the display instruction and the motion parameter may be pre-programmed in the processor 202 or pre-defined by the user through the user interface 203. Each motion parameter is related to a special motion direction and motion velocity. Therefore, after the processor 202 receives a motion parameter sent out from the motion sensor 201, a corresponding display instruction is triggered. This display instruction is sent to the display controller 204 to move the page displayed in the electronic device based on motion direction and motion velocity defined by the processor. Firmware or software may be used to implement the function of the processor 202 to perform the motion parameter triggering a corresponding display instruction.

Moreover, the display control apparatus 200 further includes a user interface 203 coupled with the processor 202. The display instruction sent out from the processor 202 may be interrupted by a user through the user interface 203 to fix a specific page in the display. Moreover, the corresponding relationship of the motion parameter to the motion direction and motion velocity may be changed by the user through the user interface 203. On the other hand, the processor 202 and the display controller 204 may be integrated together. After a motion parameter is received, step of triggering a corresponding display instruction and step of moving the page to a special location may be performed together.

An embodiment for generating a motion parameter is described in the following paragraph. In this embodiment, the motion sensor 201 is a 2-axle accelerator for detecting the motion parameter of the portable elctrical device. Please refer to the figure 2. When a user rotates or tilts the portable electronic device and causes the motion sensor 201 embedded in the electronic device to have an inclination, a specific direction and acceleration related to the inclination is detected and then a corresponding motion parameter is generated and sent to the processor 202. The motion parameter is changeable based on the inclination between the motion sensor and the X-axis (or the Y-axis). After the motion parameter is sent to the processor 202, the motion parameter is transformmed to a corresponding angle of the electronicel device relative to the X-axis (or the Y-axis) by the processor 202. Based on the angle, a corresponding display instruction is sent to the display controller 204 from the processor 202 to move the page displayed in the electronic device using a special velocity and along a special direction.

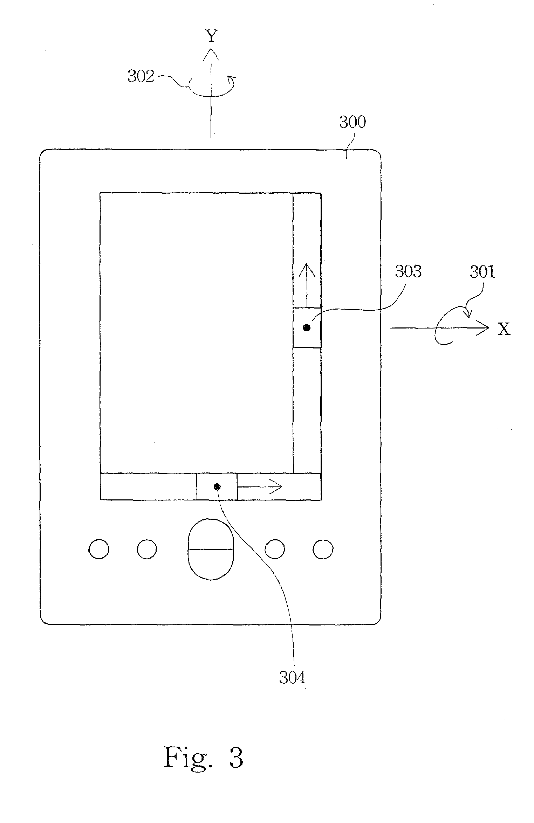

Figure 3 illustrates a portable electronic device 300 having a 320*240 pixel display. According to the embodiment, the initial location of the electronic device 300 is parallel to the page. When the electronic device 300 is inclined and the inclined angle is larger than a start degree, such as 10 degrees, a display instruction in the processor 202 is triggered and is sent to the display controller 204 to move the page displayed by the electronic device 300. Moreover, in other embodiments, after the inclined angle is larger than a start degree, each angle increment can be set to correspond to different page motion velocity. For example, the increments of the page motion velocity follow the increments of the inclined angle. Such a definition may be set by a user through the user interface 203. On the other hand, the value of the start angle and the corresponding relationship of the inclined angle to the motion velocity and the motion direction may be set by the user through the user interface 203. In other embodiment, these setting may be pre-programmed in the processor 202.

Please refer the figure 3 and figure 2. In an embodiment, a user defines that the start angle as 10 degrees. The user also defines the included angle between the electronic device 300 and the Y-axis is increased when the electronic device 300 is rotated clockwise around the X-axis, indicated by the arrow 301. When the inclined angle is larger than 10 degrees, the thumb (the wiper of scrollbar) 303 moves toward the positive Y-axis to display the upside page. Moreover, the user also defines that when the electronic device 300 is rotated clockwise around the Y-axis, indicated by the arrow 302, the included angle between the electronic device 300 and the X-axis is increased. When the inclined angle is larger than 10 degrees, the thumb 304 moves toward the positive X-axis to display the rightside page. On the other hand, when the electronic device 300 is rotated to cause that both included angles between the electronic device 300 and the X-axis and between the electronic device 300 and the Y-axis are larger than 10 degrees, in this case, the thumb 303 and the thumb 304 are moved together. That is the page is obliquely moved. Moreover, when both included angles between the electronic device 300 and the X-axis and between the electronic device 300 and the Y-axis are less than 10 degrees, the thumb 303 and the thumb 304 are not moved. Therefore, the display page is fixed. It is noticed that the initial position of the electronic device 300 may be set by the user through the user interface 204. The initial position is used as a start position of rotating or tilting the electronic device 300.

On the other hand, the user also can define the corresponding relationship of the rotation angle to the thumb motion velocity. For example, when the included angle between the electronic device 300 and the Y-axis or the X-axis is increased, the motion velocity of the thumb 303 or the thumb 304 is increased. In an embodiment, when the included angle is between 10 degrees and 15 degrees, the velocity of the thumb 303 and the thumb 304 will be a first velocity. When the included angle is between 15 degrees and 20 degrees, the velocity of the thumb 303 and the thumb 304 will be a second velocity.

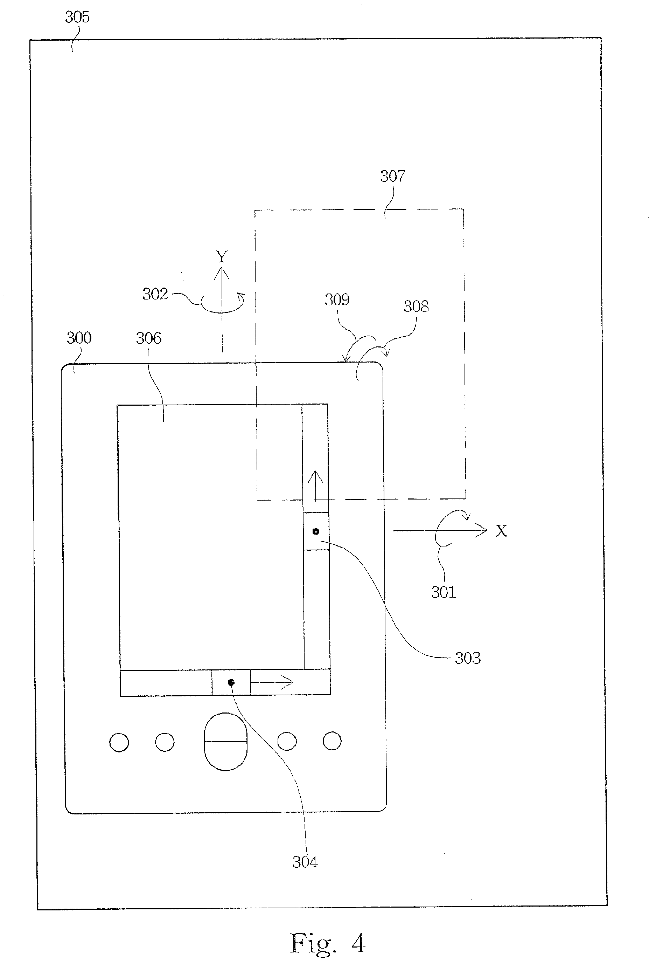

Accordingly, please refer to the figure 4 and figure 2. The page 305 drawn by the solid line is the total browsing page. The display in the electronic device 300 only can show a partial page 306 of the page 305. Therefore, when a user wants to see another part of the page 305, the user may obliquely rotate, indicated by the arrow 308, the electronic device 300 to change the included angle between the electronic device 300 and the Y-axis or between the electronic device 300 and the X-axis. For example, a user wants to see the partial page 307 of the page 305. In this case, the user may obliquely rotate the electronic device 300 to make the electronic device 300 clockwise around the X-axis and anti-clockwise around the Y-axis and to make both included angles between the electronic device 300 and the Y-axis and between the electronic device 300 and the X-axis are larger than 10 degrees.

In this case, the motion sensor 201 in the electronic device 300 detects the change of the included angle and generates a corresponding motion parameter to send to the processor 202. The processor 202 may transform the motion parameter to angles and determine whether or not the angles are larger than the start angle, 10 degrees. According to this embodiment, the angles are larger than 10 degrees. Therefore, a display instruction in the processor 202 is triggered. On the other hand, the corresponding motion velocity and the motion direction may be determined based on the acceleration value generated by the angle change detected by the motion sensor 201. The display controller 204 may move the thumb 303 and the thumb 304 based on the motion velocity and the motion direction to display a corresponding page. In this embodiment, the display controller 204 may move the thumb 303 toward the positive Y-axis direction to display the information of the upside page. The display controller 204 may move the thumb 304 toward the positive X-axis to display the information of the rightside page. In other words, the page motion direction is the joined direction of the X-axis and the Y-axis.

After the required page, page 307, is searched, the user may rotate the electronic device 300 following the direction 309 that is opposite to the direction 308 to decrease the included angle. When both the included angles between the electronic device 300 and the X-axis and the Y-axis are less than the start angle, 10 degrees, the processor may interrupt the display instruction. At this time, the display controller 204 may stop moving the thumb 303 and the thumb 304. Therfore, the page is fixed in the page 307. In another embodiment, the user may directly interrupt the display instruction through the user interface 203. If the user does not oppositely rotate the electronic device 300 to reduce the included angle and make the included angle less than 10 degrees, or does not interrupt the display instruction through the user interface 203, the thumb 303 and the thumb 304 may continue to move respectively along the X-axis and the Y-axis.

In other words, a user may vary the included angle between the electronic device 300 and the X-axis or the electronic device 300 and the Y-axis to change or to stop the page motion. On the other hand, the start angle, the corelation between the included angle and the motion velocity and the corelation between the included angle and the motion direction may be set by the user through the user interface 203 to fit the needs of the user. Moreover, the initial position of the electronic device 300 may be set by the user. Therefore, the user may set the display device in the most suitable initial position. In this case, when the user rotates the electronic devcie 300 and a wanted page is found, by rotating the electronic device 300 to back to the initial position, the wanted page is fixed in the display and the user may browse this page. On the other hand, the rotation angles of the electronic device are transformed to the sine values of angle. Therefore, when the electronic device is rotated to 180 degrees, the direction of the page motion is oposite to the original setting. Therefore, the user may renew the setting through the user interface 203.

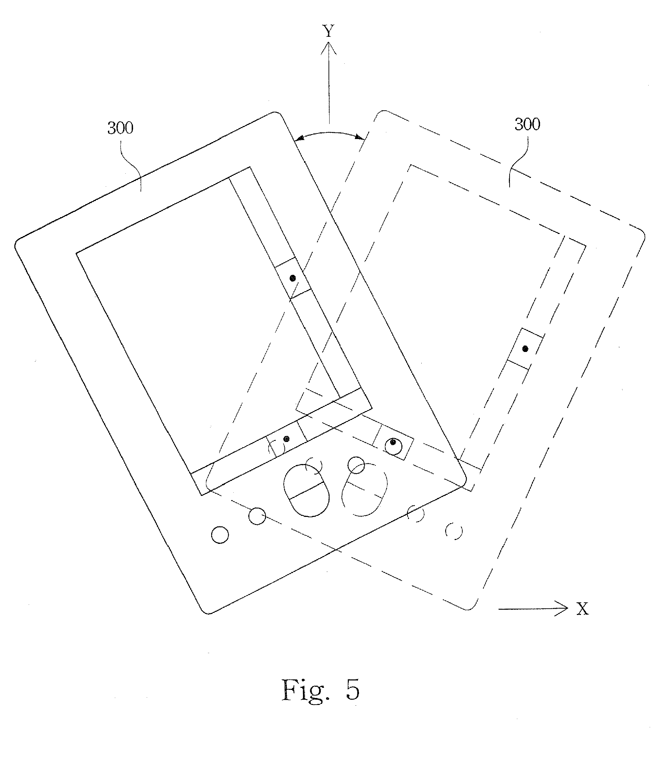

It is noticed that, in another embodiment, a user may tilt the electronic device 300 to change the motion parameter to control the page motion as shown in the figure 5. When the electronic device 300 is tilted, the included angle between the electronic device 300 and the X-axis or the Y-axis is changed. The motion sensor 201 detects the change of the acceleration of the electronic device 300 and generates a corresponding motion parameter to trigger the display instruction. Based on the motion parameter, a motion direction and a motion velocity are determined to move the page based on the angle change with the X-axis and the Y-axis and the acceleration value. Similarly, a start angle is set to determine whether or not the page should be stopped or moved. For example, a 10 degrees start angle is set. When the included angle between the electronic devcie 300 and the X-axis or the Y-axis is less than 10 degrees, the page stops moving.

On the other hand, the acceleration difference value is used to determine the motion distance of the electronic devcie 300 from the initial position. For example, when determining whether the motion distance of the electronic devcie 300 from the first position moving to the second position is larger than the start distance, a difference value is determined first by comparing the acceleration value in the first position with the acceleration value in the second position. When the difference value is larger than a specific value, a result of the motion distance larger than the start disdance is determined.

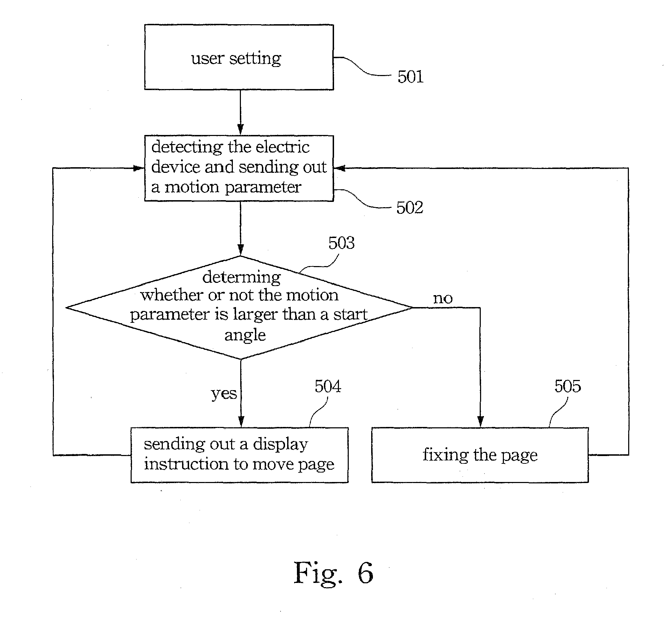

Figure 6 illustrates a flow chart for controlling the display according to an embodiment of the present invention. Please refer the figure 6 and figure 2. In step 501, a user may set the control parameters through the user interface 203. For example, this user may set the start angle and the relationship between the rotation angle of the electronic device and the motion distance or the motion direction. It is noticed that this step is a selective step. The above setting may be directly programmed in the processor 202. Next, in step 502, the motion sensor 201 senses the motion of the electronic device and sends out a motion parameter. The motion parameter is a sine values of the included angles between the electronic device 300 and the X-axis and the Y-axis. In step 503, the processor 202 receives the motion parameters and transforms these parameters into angles. The processor 202 may determine whether or not the angles are larger than the start angle. If the angle is larger than the start angle, a corresponding display instruction is triggered. Finally, in step 504, this display instruction is sent to the display controller 204. The controller may control the electronic device to perform a corresponding page motion based on the display instruction. On the other hand, if the angle is less than the start angle, the display instruction output is stopped. Therefore, the controller 204 may stop moving the thumb 303 and the thumb 304. In this case, the page is fixed and shown in the display of the electronic device 300. It is noticed that after step 504 and step 505 are performed, step 502 is performed again to detect the motion of the electronic device 300.

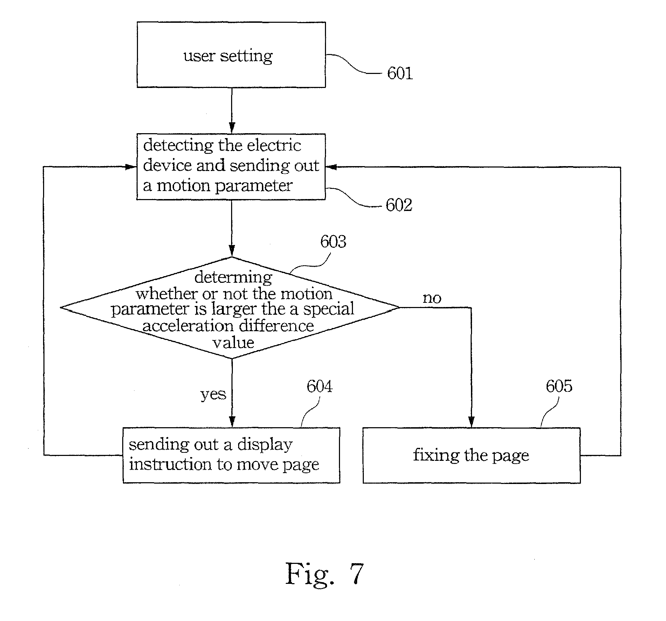

On the other hand, Figure 7 illustrates a flow chart for controlling the display according to another embodiment of the present invention. Please refer the figure 7 and figure 2. In step 601, a user may set the control parameters through the user interface 203. For example, the user may set the acceleration difference value, the relationship of the acceleration difference value to the motion distance or the motion direction, or the initial position of the electronic device 300. Step 601 is a selective step. The above setting may be directly programmed in the processor 202. Next, in step 602, the motion sensor 201 senses the motion of the electronic device and sends out a motion parameter. The motion parameter is an acceleration difference value of the electronic device 300 by comparing the acceleration value in the initial position with the acceleration value in the detected position. In step 603, the processor 202 may determine whether or not the acceleration difference value is larger than the start acceleration difference value. If the acceleration difference value is larger than the start acceleration difference value, a corresponding display instruction is triggered. Finally, in step 604, this display instruction is sent to the display controller 204. The controller may control the electronic device to perform a corresponding page motion based on the display instruction. On the other hand, if the acceleration difference value is less than the start acceleration difference value, a display instruction output is stopped. Therefore, the controller 204 may stop moving the thumb 303 and the thumb 304. In this case, the page is fixed and shown in the display of the electronic device 300. It is noticed that after step 604 and step 605 are performed, step 602 is performed again to detect the motion of the electronic device 300.

Accordingly, the display control apparatus of the present invention includes a motion sensor, a processor and a display controller. The motion sensor is used to sense the motion of a electronic device and sends out a motion parameter to a processor. Each motion parameter is related to a special motion direction and motion velocity. Therefore, when the processor receives a motion parameter, a corresponding display instruction is triggered. This display instruction is sent to the display controller to move the page based on the motion direction and motion velocity.

Accordingly, no additional control button is installed in the electronic device, which does not affect the whole volume of the electronic device. Moreover, a user may set the relationship between the rotation angle of electronic device and the page motion based on his requirement.

As is understood by a person skilled in the art, the foregoing descriptions of the preferred embodiment of the present invention are an illustration of the present invention rather than a limitation thereof. Various modifications and similar arrangements are included within the spirit and scope of the appended claims. The scope of the claims should be accorded to the broadest interpretation so as to encompass all such modifications and similar structures. While a preferred embodiment of the invention has been illustrated and described, it will be appreciated that various changes can be made therein without departing from the spirit and scope of the invention.

## Claims

1. A display control apparatus installed in an electronic device for changing the display page, the apparatus comprising:
a motion sensor for detecting the motion of the electronic device in respect to a special position to send at least one motion parameter;
a processor for receiving the motion parameter to determine the motion direction and the motion velocity based on the motion parameter and send out a display instruction; and
a display controller for receiving the display instruction to move the display page based on the motion direction and the motion velocity.

2. A display control apparatus installed in an electronic device for changing the display page, the apparatus comprising:
a motion sensor for detecting acceleration values of the electronic device to axles of a special position to send at least one motion parameter related to the axles;
a processor for receiving the motion parameter and based on the acceleration values to determine a motion direction and a motion velocity and send out a display instruction; and
a display controller for receiving the display instruction to move the display page based on the motion direction and the motion velocity.

3. A display control apparatus installed in an electronic device for changing the display page, the apparatus comprising:
a motion sensor for detecting inclinations of the electronic device to axles of a special position to send at least one motion parameter related to the axles;
a processor for receiving the motion parameter and based on the motion parameter to determine a motion direction and a motion velocity and send out a display instruction; and
a display controller for receiving the display instruction to move the display page based on the motion direction and the motion velocity.

4. The display control apparatus of claim 1, 2 or 3, further comprising a user interface to define the relationship between the motion parameter and the motion direction, and the relationship between the motion parameter and the motion velocity.

5. The display control apparatus of claim 1, wherein the motion parameter is related to an inclination of the electronic device to the axles forming the special position.

6. The display control apparatus of claim 5, wherein the motion direction and the motion velocity are related to the inclination.

7. The display control apparatus of claim 1, wherein the motion parameter is related to acceleration values of the electronic device to the axles of a specific position.

8. The display control apparatus of claim 2 or 3, wherein the axles are X-axis and Y-axis, a scrollbar of the Y-axis is moves toward the positive Y-axis direction when the electronic device rotates clockwise around the X-axis, and a scrollbar of X-axis is moves towards the positive X-axis direction when the electronic device rotates clockwise around the Y-axis.

9. The display control apparatus of claim 2 or 3, wherein the motion parameter is an acceleration difference value of the electronic device by comparing an acceleration value in the special position with an acceleration value in the detected position.

10. The display control apparatus of claim 2 or 3, wherein the processor stops moving the page when the acceleration difference value is less than a specific value.
